# EUROPEAN PATENT APPLICATION

(11) **EP 4 790 389 A1**
(43) Date of publication of application: **12.08.2026**
(21) Application number: 24905593.0
(22) Date of filing: 16.08.2024
(51) Int. Cl.: G01N 21/59, G02B 6/44

(54) **FLEXIBLE OPTICAL FIBER RIBBON AND BONDING EFFECT TESTING SYSTEM AND METHOD THEREOF**

(30) Priority: 20.12.2023 CN 202311759760
(71) Applicant: Yangtze Optical Fibre and Cable Joint Stock Limited Company, East Lake High-tech Development Zone Wuhan Hubei 430073 (CN)
(72) Inventor: HUANG, Jun, Wuhan, Hubei 430073 (CN); RUAN, Yunfang, Wuhan, Hubei 430073 (CN); WU, Fan, Wuhan, Hubei 430073 (CN); CHU, Yifan, Wuhan, Hubei 430073 (CN); ZHENG, Lei, Wuhan, Hubei 430073 (CN); QI, Lin, Wuhan, Hubei 430073 (CN); YANG, Xiangrong, Wuhan, Hubei 430073 (CN); XIONG, Zhuang, Wuhan, Hubei 430073 (CN)
(74) Representative: Lorenz Seidler Gossel Part. mbB
(86) International application number: PCT/CN2024/112734
(87) International publication number: WO 2025/130098

(57) **Abstract**

A flexible optical fiber ribbon includes multiple optical fibers arranged side by side, with intermittent bonding parts between adjacent optical fibers. The transmittance of the intermittent bonding parts for a wavelength band of a detection light is 50% or lower. The optical fiber coating is covered with a color layer, and the color layer is covered with a light-transmitting layer. The transmittance of the color layer for the wavelength band of the detection light is 30% or lower, and the transmittance of the light-transmitting layer for the wavelength band of the detection light is 85% or higher. The bonding parts with qualified bonding performance cover the light-transmitting layer in the detection light direction.

## Description

### Technical Field

The present disclosure belongs to the field of optical communication, and more specifically, relates to a flexible optical fiber ribbon and a system and a method for detecting a bonding performance thereof.

### Description of Related Art

There are intermittent bonding parts between adjacent optical fibers in a flexible optical fiber ribbon. The connection is formed by placing a bonding material or an adhesive between the optical fibers in a regular pattern through equipment. Because of equipment stability, adhesive quality and other issues, adhesive dispensing might occur improperly, including misaligned adhesive dots that span across other optical fibers, which would cause unintended bonding between optical fibers that should not be adhered together. Furthermore, defects such as missing adhesive dots and abnormal adhesive dispensing lengths might occasionally occur. The bonding performance of flexible optical fiber ribbons is critical to determining the structural stability of both the flexible optical fiber ribbons and an overall ribbon cable structure.

Because the flexible optical fiber ribbons are manufactured in a high production speed which may be as high as 2m/s to 10m/s, and the adhesive dispensing pitch is short, which is approximately 40mm to 100mm, visual inspection is unable to keep pace with the adhesive dispensing speed, even when high-speed cameras for image capture is employed. Furthermore, owing to the limited shutter speed, the acquired images exhibit trailing effects and artifacts, rendering it impossible to accurately identify positions with poor bonding quality through intelligent algorithms or even visual inspection.

### SUMMARY

To remedy deficiencies or make improvement for the related art, the present disclosure provides a flexible optical fiber ribbon, a method and a system for detecting a bonding performance thereof. The purpose of the present disclosure is to form a transparent layer on the exterior of colored optical fibers to serve as a signal light receptor, which, in conjunction with an opaque bonding part, employs the on-off operation and intensity of signal light as detection signals to assess the bonding performance of the bonding part. There is no need to adopt imaging or an image analysis. Such design significantly enhances the speed of quality detection for the bonding performance of the bonding part without limiting the manufacturing speed of the flexible optical fiber ribbons. Accordingly, it is possible to overcome the existing technical difficulty in performing online detection for the bonding parts of the flexible optical fiber ribbons one-by-one and thereby solving the problem of ineffective detection for bonding performance.

To achieve the above purpose, according to one aspect of the present disclosure, a flexible optical fiber ribbon is provided, which includes a plurality of optical fibers arranged side by side, and there are intermittent bonding parts between the adjacent optical fibers;

The intermittent bonding parts have a transmittance of 50% or lower for a wavelength band of a detection light;

An optical fiber coating is covered with a color layer, and the color layer is covered with a light-transmitting layer;

The color layer has a transmittance of 30% or lower for the wavelength band of the detection light, and the light-transmitting layer has a transmittance of 85% or higher for the wavelength band of the detection light;

The bonding parts with a qualified bonding performance cover the light-transmitting layer in a detection light direction.

Preferably, the flexible optical fiber ribbon has the light-transmitting layer with a thickness of 10um to 50um, and the thickness d of the light-transmitting layer is set to be greater than or equal to half of a bonding part width threshold D, that is, d ≥ D/2.

Preferably, the flexible optical fiber ribbon has the light-transmitting layer with a modulus that is greater than 500Mpa and made of a UV-curable acrylic resin. A modulus of the color layer is greater than 600Mpa and is made of a UV-curable acrylic ink.

According to another aspect of the present disclosure, a system for detecting a bonding performance for a flexible optical fiber ribbon is provided, including a light detection device arranged downstream of a bonding part forming device on a production line. The light detection device includes a detection light source and a light receiver.

The detection light source is disposed above the flexible optical fiber ribbon and emits a detection light with a preset wavelength band. The light receiver is disposed below the bonding part at a detection position and is positioned on an optical path of the detection light source.

When the bonding part appears at the detection position at an expected moment, in the case where a width of the bonding part is smaller than a qualified width threshold of the bonding part, the detection light passes through the light-transmitting layer of the optical fiber, and an optical signal is detected by the light receiver, thereby determining that the bonding performance of the bonding part is not qualified.

Preferably, the system for detecting the bonding performance of the flexible optical fiber ribbon has the detection light with the wavelength band that is in a visible light range.

Preferably, the system for detecting the bonding performance of the flexible optical fiber ribbon has the light receiver with a detection range that covers a width range of the adjacent optical fibers.

Preferably, the system for detecting the bonding performance of the flexible optical fiber ribbon has the light receiver that is at a distance of 0.5mm to 30mm from the flexible optical fiber ribbon.

Preferably, the system for detecting the bonding performance of the flexible optical fiber ribbon has the light receiver that is arranged in a staggered manner in an optical fiber arrangement direction.

According to another aspect of the present disclosure, a method for detecting a bonding performance for a flexible optical fiber ribbon is provided, wherein a detection light is irradiated onto a to-be-detected bonding part of the flexible optical fiber ribbon from one side of the flexible optical fiber ribbon along a detection direction, and the detection light is detected from the other side. When a transmittance of the detection light is detected, it is determined that the bonding performance of the to-be-detected bonding part is not qualified.

Preferably, the method for detecting the bonding performance for the flexible optical fiber ribbon is applicable for the system for detecting the bonding performance of the flexible optical fiber ribbon of the present disclosure.

To sum up, the above technical solutions conceived by the present disclosure is able to achieve the following advantageous effects compared with the related art.

The present disclosure improves the structure of the optical fiber coating adopted by the flexible optical fiber ribbon and the light transmission performance of the bonding part, in conjunction with the use of photosensitive elements to perform on-off detection using optical signals, the detection is sensitive, accurate and has a detection speed far exceeding imaging detection. The present disclosure adopts the on-off detection for the optical signals to avoid the drawbacks of trailing and afterimage caused by convention imaging detection, thereby significantly improving the detection efficiency, mitigating the constraints for the manufacturing speed caused by quality monitoring on the production line, and improving the manufacturing efficiency.

The system for detecting the bonding performance of the flexible optical fiber ribbon provided by the present disclosure has both hardware and software costs far lower than the conventional system combination of optical imaging and image recognition, thereby reducing the cost of the production line for flexible optical fiber ribbons.

In a preferred solution, the flexible optical fiber ribbon provided by the present disclosure simplifies a bonding force of the bonding part of optical fiber from a combination of a bonding resin plus multiple color resin surfaces to a combination of a bonding resin plus a high-transmittance resin. Accordingly, there is no need to take into consideration the influence of different optical fiber coloring pigments on the bonding force between the optical fiber coating and the bonding part, thereby reducing the difficulty in material development, manufacturing and ribbon process control brought by the delicate balance control of the bonding force and the tearing force, thus ensuring the stability of product quality.

### BRIEF DESCRIPTION OF THE DRAWINGS

FIG. 1 is a plan view of a flexible optical fiber ribbon provided by the present disclosure.
FIG. 2 is a cross-sectional view taken along line A-A of the flexible optical fiber ribbon provided by the present disclosure.
FIG. 3 is a structural view of a system for detecting a bonding performance of the flexible optical fiber ribbon provided by the present disclosure.
FIG. 4 is a schematic view of a detection signal for detecting the bonding performance of the flexible optical fiber ribbon provided in an embodiment of the present disclosure.

In the drawings, the same reference numerals are used to represent the same elements or structures, wherein: 1 is optical fiber, 2 is bonding part of first arrangement, 3 is bonding part of second arrangement, 4 is an optical fiber glass part, 5 is a natural-colored optical fiber resin, 6 is color layer, 7 is a bonding resin, 8 is a high-transmittance layer, 9 is a light source, 10 is a detection light, 11 is a light receiver.

### DESCRIPTION OF THE EMBODIMENTS

In order to make the objectives, technical solutions and advantages of the present disclosure more comprehensible, the present disclosure will be described in further detail below in conjunction with embodiments. It should be understood that the specific embodiments described herein are merely used to explain the present disclosure and are not used to limit the present disclosure. In addition, the technical features involved in the various embodiments of the present disclosure described below may be combined with each other as long as they do not constitute conflicts with each other.

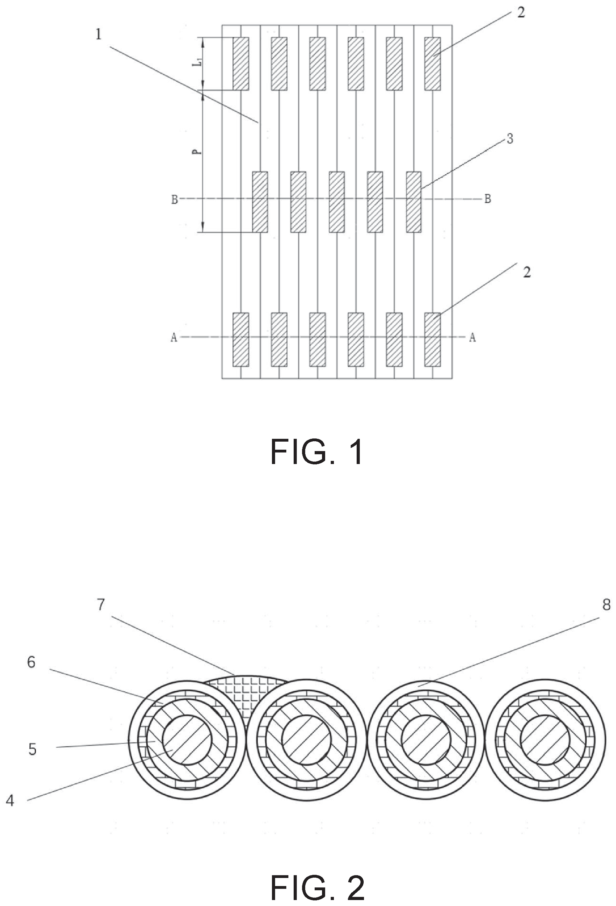

A flexible optical fiber ribbon provided by the present disclosure is as shown in FIG. 1, which includes a plurality of optical fibers arranged side by side, and there are intermittent bonding parts between the adjacent optical fibers;

The intermittent bonding parts have a transmittance of 50% or lower for a wavelength band of a detection light;

An optical fiber coating is covered with a color layer, and the color layer is covered with a light-transmitting layer;

The color layer has a transmittance of 30% or lower for the wavelength band of the detection light, and the light-transmitting layer has a transmittance of 85% or higher for the wavelength band of the detection light;

The bonding parts with a qualified bonding performance cover the light-transmitting layer in a detection light direction. The light-transmitting layer has a thickness of 10um to 50um, and the thickness d of the light-transmitting layer is set to be greater than or equal to half of a bonding part width threshold D, that is, d ≥ D/2. The light-transmitting layer on the outside of the optical fiber serves as a detection signal sensor. When the light-transmitting layer is transmitted by the detection light, it means that the bonding performance of the bonding part is poor. Therefore, the thickness of the light-transmitting layer determines the detection accuracy. The greater the thickness, the higher the detection standard, and the higher the requirement for the bonding performance of the bonding part, otherwise, the requirement for the bonding part is reduced.

The light-transmitting layer has a modulus that is greater than 500Mpa and made of a UV-curable acrylic resin. A modulus of the color layer is greater than 600Mpa and is made of a UV-curable acrylic ink. The modulus of the light-transmitting layer is lower than that of the color layer. When the optical fibers are separated, a transparent layer will rupture prior to the color layer, thereby avoiding tearing of the color layer which would affect an identification effect after splitting the optical fibers.

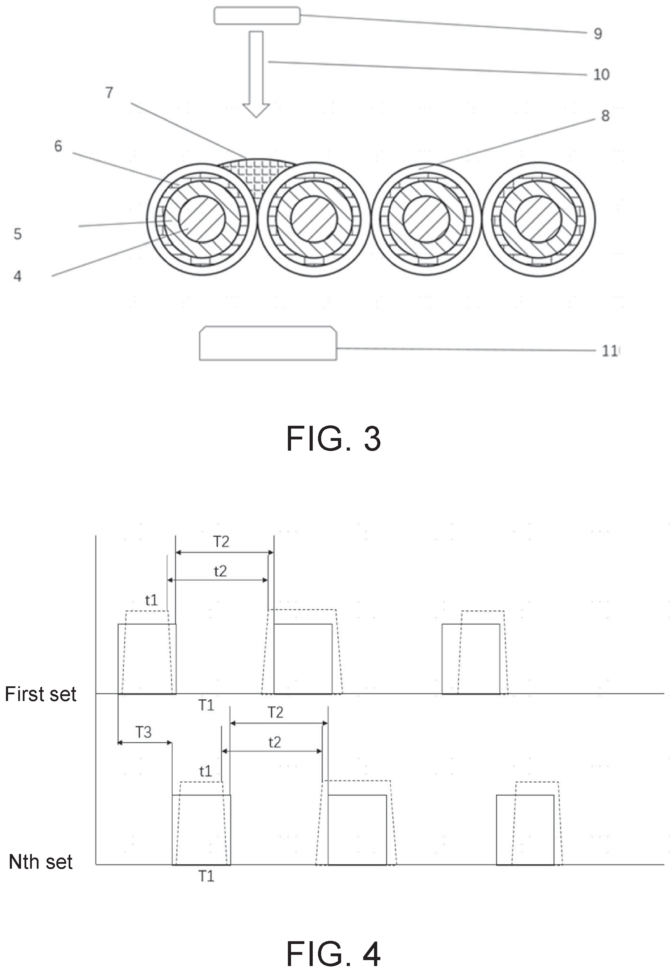

As shown in FIG. 3, a system for detecting the bonding performance for the flexible optical fiber ribbon provided by the present disclosure includes a light detection device arranged downstream of a bonding part forming device on a production line. The light detection device includes a detection light source and a light receiver.

The detection light source is disposed above the flexible optical fiber ribbon and emits a detection light with a preset wavelength band. It is required for a light spot of the light source to be emitted vertically and focused at the center of the adjacent optical fibers being detected, with a light spot diameter being less than or equal to a spacing between the adjacent optical fibers of the flexible optical fiber ribbon. The light receiver is disposed below the bonding part at a detection position and is positioned on an optical path of the detection light source. The wavelength band of the detection light is preferably in a visible light range for ease of observation and imaging.

A detection range of the light receiver covers a width range of the adjacent optical fibers. Preferably, the light receiver is positioned 0.5mm to 30mm away from the flexible optical fiber ribbon to avoid receiving stray light signals that cause a false detection. The space for setting the light receiver normally exceeds the width of the flexible optical fiber ribbon, creating a spatial obstruction, and the use of area array photosensitive elements limits the detection speed. In the preferred solution, the light receivers are arranged in the staggered manner in an optical fiber arrangement direction, which solves the spatial hindrance while performing on-off detection without mutual interference (only detecting light intensity rather than the shape of optical signal). The detection speed and sensitivity are far higher than that of imaging detection.

When the bonding part appears at the detection position at an expected moment, in the case where a width of the bonding part is smaller than a qualified width threshold of the bonding part, the detection light passes through the light-transmitting layer of the optical fiber, and the optical signal is detected by the light receiver, thereby determining that the bonding performance of the bonding part is not qualified.

A method for detecting the bonding performance for the flexible optical fiber ribbon provided by the present disclosure includes the following steps: the detection light is irradiated onto a to-be-detected bonding part of the flexible optical fiber ribbon from one side of the flexible optical fiber ribbon along a detection direction, and the detection light is detected from the other side. When a transmittance of the detection light is detected, it is determined that the bonding performance of the to-be-detected bonding part is not qualified.

The present disclosure uses the light-transmitting layer as a sensor and performs the on-off detection using the optical signals through the photosensitive elements, the detection is sensitive, accurate, and has a detection speed far exceeding that of the imaging detection, making the method suitable for high-speed production lines for the flexible optical fiber ribbons.

The embodiments are provided as follows.

### First Embodiment

The flexible optical fiber ribbon provided in the embodiment is a 12-core optical fiber ribbon with a spacing of 250um between the centers of the optical fibers. A structure of the 250um colored optical fibers adopted in the embodiment is: 210um natural-colored optical fibers with its glass part having a diameter of 125um. There are inner and outer coatings outside the glass, the glass has a diameter of 210um after coating. Then, coloring is performed by using acrylic-based ink with a color layer having an outer diameter of 220um. A layer of approximately 15um thick acrylic UV-curable high light-transmitting resin is further colored outside the colored optical fibers. The resin has a transmittance of 85% or more, making the optical fibers having a diameter of 250um. After this layer is colored, the transparent layer does not affect the differentiation between optical fibers through the color layer. The transmittance of the color layer is 25%. The modulus of the high light-transmitting cured resin is 550Mpa. The modulus of the light-transmitting layer is lower than that of the color layer, and the modulus of the color layer is 650Mpa. When the optical fibers are separated, the transparent layer will rupture prior to the color layer, thereby avoiding tearing of the color layer which would affect the identification effect of the split optical fibers. A bonding resin, which is the intermittent bonding part, is distributed intermittently between the optical fibers. A first arrangement of the bonding parts is distributed at a position A-A, and a second arrangement of the bonding parts is distributed at a position B-B, as shown in FIG. 1. A length of the bonding resin is 5mm to 20mm, and the spacing between the resins is 50mm to 100mm.

### Second Embodiment

The system for detecting the bonding performance of the flexible optical fiber ribbon provided in this embodiment is as shown in FIG. 3. In the arrangement directly above the parallel plane of the optical fiber ribbon, N-1 sets of light sources are positioned vertically in a staggered configuration, corresponding to the bonding parts of the first arrangement and the bonded parts of the second arrangement. In a longitudinal direction of the optical fibers, a staggered distance exceeds the length of the light source itself. In a width direction of the optical fibers, the light sources are sequentially staggered by predetermined intervals. Where necessary, the bonding parts of either the first arrangement or second arrangement are arranged in the staggered manner at multiple positions in the longitudinal direction. The light sources are calibrated, because it is required for a light spot of the light source to be emitted vertically and focused at the center of the adjacent optical fibers being detected. A diameter of the light spot is less than 200um to prevent coverage of other fibers. Concurrently, the light receivers are positioned directly below the light sources at approximately 10mm from the parallel plane of the optical fiber ribbon. The light receivers are staggered in the longitudinal direction of the optical fibers, aligned with the light sources above, ensuring that no interference occurs between the light receivers, while maintaining sufficient stagger intervals to prevent reception of light emitted from the adjacent light sources. During detection operations, the light sources remain continuously illuminated upon equipment activation, emitting laser light continuously. When the optical fibers of the corresponding channels move into a laser range accompanied by bonding parts, the light receivers directly beneath cannot receive the optical signal due to extremely low light transmittance. Conversely, when non-bonding parts of the optical fibers move into the laser range, the light receivers directly beneath are able to receive the signal. The on or off of signal transmission may be converted to determine whether there are bonding parts between the optical fibers or whether the bonding performance of the bonding parts meets qualification standards.

### Third Embodiment

A process of applying the detection system provided in the Second Embodiment to detect the bonding performance of the flexible optical fiber ribbon provided in the First Embodiment is as follows.

The optical fiber ribbon being detected is a 12-core optical fiber ribbon, with 11 sets of light sources and a light receiver system combined to form the light detection device. The bonding parts of the optical fiber ribbon have a length of 10mm and disposed at a spacing of 60mm.

A manufacturing speed of the optical fiber ribbon is 5m/s. When the bonding part moves under the laser light spot, the light receiver will be unable to receive the optical signals for approximately T1=2ms, which is a pulse silent state, followed by T2=10ms during which the optical signals may be received, which is the pulse active state. Meanwhile, phase comparison is performed between the optical signals and pulse signals received by the light receivers of the 11 sets of light sources and the light receiver system. Through computer data processing, the misalignment distance of bonding parts on any optical fiber channel may be calculated. This misalignment distance may be compared with a preset misalignment distance of the bonding part, and an alarm will be triggered if deviation occurs. Under the circumstances, it is necessary to check whether there is blockage in the bonding part forming device or whether cumulative errors have occurred in the control between a mold/nozzle.

When the nozzle or the mold experiences partial blockage and part of the resin is ejected, the time of pulse activation and pulse silence will be affected. The periods during which the light receiver actually receives the signal are t1 and t2 respectively. When t1/T1-1 and t2/T2-1 exceed ±10%, the alarm will be triggered and the machine needs to be suspended for inspection.

When the cumulative errors occur in the control between the mold/nozzle, the alarm will be triggered when the phase difference t3/T3-1 between different channels exceeds ±20%, requiring the machine to be suspended for inspection.

When the nozzle or the mold is blocked and the bonding resin is completely unable to be ejected, no bonding part is formed between the optical fibers. Under the circumstances, the intensity received by the light receiver is P1. Since the pulse silent state far exceeds the specified T2, the alarm will be triggered and the machine needs to be suspended for inspection.

When the nozzle or the mold is blocked and part of the bonding resin is ejected, there is limited bonding part between the optical fibers, and the width of the bonding part will be less than the width threshold 20um. Under the circumstances, the bonding force between the optical fibers will be at a low level. During the manufacture of the optical fiber ribbon and subsequent cabling and use of the optical fiber ribbon, it is unable to ensure that the optical fibers remain in a ribbon form. Under the circumstances, the intensity of the light receiver is P2. When P2/P1 is greater than 80%, the alarm will still be triggered and the machine needs to be suspended for inspection.

Those skilled in the art can easily understand that the above descriptions are only preferred embodiments of the present disclosure and are not intended to limit the present disclosure. Any modifications, equivalent substitutions, and improvements made within the spirit and principles of the present disclosure shall be included within the scope to be protected by the present disclosure.

## Claims

1. A flexible optical fiber ribbon, comprising a plurality of optical fibers arranged side by side, and there are intermittent bonding parts between the adjacent optical fibers;
wherein the intermittent bonding parts have a transmittance of 50% or lower for a wavelength band of a detection light;
an optical fiber coating is covered with a color layer, and the color layer is covered with a light-transmitting layer;
the color layer has a transmittance of 30% or lower for the wavelength band of the detection light, and the light-transmitting layer has a transmittance of 85% or higher for the wavelength band of the detection light;
the bonding parts with a qualified bonding performance cover the light-transmitting layer in a detection light direction.

2. The flexible optical fiber ribbon according to claim 1, wherein the flexible optical fiber ribbon has the light-transmitting layer with a thickness of 10um to 50um, and the thickness d of the light-transmitting layer is set to be greater than or equal to half of a bonding part width threshold D.

3. The flexible optical fiber ribbon according to claim 1, wherein the light-transmitting layer has a modulus that is greater than 500Mpa and is made of a UV-curable acrylic resin, a modulus of the color layer is greater than 600Mpa and is made of a UV-curable acrylic ink.

4. A system for detecting a bonding performance for the flexible optical fiber ribbon according to any one of claims 1-3, comprising a light detection device arranged downstream of a bonding part forming device on a production line, wherein the light detection device comprises a detection light source and a light receiver,
the detection light source is disposed above the flexible optical fiber ribbon and emits a detection light with a preset wavelength band, the light receiver is disposed below the bonding part at a detection position and is positioned on an optical path of the detection light source,
when the bonding part appears at the detection position at an expected moment, in the case where a width of the bonding part is smaller than a qualified width threshold of the bonding part, the detection light passes through the light-transmitting layer of the optical fiber, and an optical signal is detected by the light receiver, thereby determining that the bonding performance of the bonding part is not qualified.

5. The system for detecting the bonding performance for the flexible optical fiber ribbon according to claim 4, wherein the detection light has the wavelength band that is in a visible light range.

6. The system for detecting the bonding performance for the flexible optical fiber ribbon according to claim 4, wherein the light receiver has a detection range that covers a width range of the adjacent optical fibers.

7. The system for detecting the bonding performance for the flexible optical fiber ribbon according to claim 6, wherein the light receiver is at a distance of 0.5mm to 30mm from the flexible optical fiber ribbon.

8. The system for detecting the bonding performance for the flexible optical fiber ribbon according to claim 4, wherein the light receiver is arranged in a staggered manner in an optical fiber arrangement direction.

9. A method for detecting a bonding performance for the flexible optical fiber ribbon according to any one of claims 1-3, wherein the detection light is irradiated onto a to-be-detected bonding part of the flexible optical fiber ribbon from one side of the flexible optical fiber ribbon along a detection direction, and the detection light is detected from the other side, when a transmittance of the detection light is detected, it is determined that a bonding performance of the to-be-detected bonding part is not qualified.

10. The method for detecting the bonding performance for the flexible optical fiber ribbon according to claim 9, being applicable for a system for detecting the bonding performance of the flexible optical fiber ribbon according to any one of claims 4-8.
